Europäisches Patentamt

European Patent Office

Office européen des brevets

(19)

(11) Veröffentlichungsnummer: **0 003 125**
**B1**

(12)

# EUROPÄISCHE PATENTSCHRIFT

(45) Veröffentlichungstag der Patentschrift:
**22.07.81**

(51) Int. Cl.³: **C 25 F 3/04**, H 01 G 9/04

(21) Anmeldenummer: **79100054.0**

(22) Anmeldetag: **09.01.79**

(54) Verfahren zum elektrolytischen Ätzen einer rekristallisierten Aluminiumfolie und deren Verwendung.

(30) Priorität: **12.01.78 DE 2801218**

(43) Veröffentlichungstag der Anmeldung:
**25.07.79 Patentblatt 79/15**

(45) Bekanntmachung des Hinweises auf die Patenterteilung:
**22.07.81 Patentblatt 81/29**

(84) Benannte Vertragsstaaten:
**FR GB IT**

(56) Entgegenhaltungen:
**DE-B-1 621 175**
**US-A-3 779 877**
**US-A-4 042 475**
**WERKSTOFFE UND KORROSION, 23, (5), Seiten 337—341**

(73) Patentinhaber: **SIEMENS AKTIENGESELLSCHAFT Berlin und München, Postfach 22 02 61, D-8000 München 22 (DE)**

(72) Erfinder: **Fickelscher, Horst, Lukas-Cranach-Strasse 38, D-7920 Heidenheim (DE)**

## Verfahren zum electrolytischen Ätzen einer rekristallisierten Aluminiumfolie und deren Verwendung

Die Erfindung betrifft ein Verfahren zum elektrolytischen Ätzen einer rekristallisierten Aluminiumfolie, wobei die Ätzung als potentiostatische Ätzung mit zeitlich konstantem Anodenpotential durchgeführt wird und die Verwendung einer derart geätzten Folie.

Aus der Zeitschrift »Werkstoffe und Korrosion«, 23, (5), Seiten 337 bis 341 sind potentiostatische Meßverfahren mit zeitlich konstantem Anodenpotential für Stromdichte-Potential-Messungen an Elektroden aus Reinaluminiumblechen zur Ermittelung des lochförmigen Korrosionsangriffs bekannt. In der Zeitschrift ist erwähnt, daß derartige Meßverfahren zur Eignungsprüfung für Oberflächenbehandlungsverfahren, wie z. B. beim Ätzen, anwendbar sind.

Aus der US-A-3 779 877 und der DE-B-1 621 175 sind Verfahren zur Herstellung von elektrochemisch aufgerauhten Aluminiumfolien unter Verwendung eines Chlorid-Ionen enthaltenden Ätzbades bekannt.

Bei der elektrolytischen Ätzung von Aluminiumfolien erfolgt eine Oberflächenvergrößerung. Diese Oberflächenvergrößerung hat zur Folge, daß Elektrolytkondensatoren, welche mit geätzten Folien hergestellt werden, bei gleicher Kapazität kleinere Volumina aufweisen.

Aluminiumfolien, welche nach den bisher bekannten Ätzverfahren aufgerauht worden sind, zeigen neben einer regulären tunnelartigen Ätzstruktur unerwünschte Überlagerungen von unregelmäßigem, strukturell zu grobporigem Lochfraß. Daraus resultiert, daß im Verhältnis zum elektrolytisch aus der Folie abgelöstem Aluminium nur ungefähr 10 bis 60% der mathematisch möglichen Kapazitätsvergrößerungsfaktoren bei idealisierter Ätzstruktur erreicht werden. Als ideale Ätzstruktur ist dabei eine reine Tunnelätzung mit definiertem und gleichmäßigem Tunneldurchmesser ohne den unerwünschten Lochfraß angestrebt.

Dem Fachmann ist bekannt, daß in rekristalliertem Aluminium mit sehr geringen Ätzstromdichten in der Größenordnung von 10 mA/cm² reine Tunnelätzung ohne groben Lochfraß erhalten wird. Die so erzielbaren Tunneldichten erreichen aber bei weitem bei diesen bekannten Verfahren nicht die für hohe Oberflächen- bzw. Kapazitätsvergrößerungsfaktoren erforderlichen Werte von > 10⁷ Tunnels/cm² Folienoberfläche.

Es ist weiterhin zwar bekannt, daß die Tunneldichte mit zunehmender Ätzstromdichte vergrößert werden kann, jedoch ist dies nur unter Inkaufnahme von zunehmend groben und unregelmäßigem Lochfraß möglich. Die bekannten Ätzverfahren sind deshalb ein Kompromiß aus möglichst hoher Tunneldichte bei vergleichsweise erträglichem Anteil an unregelmäßigem, struktuell zu großen Lochfraß. Die Grenzen der möglichen Aufrauhfaktoren bei gegebener Foliendicke und Aluminiumabtragsrate sind deshalb insbesondere für Aluminiumfolien, welche in Niedervolt-Elektrolytkondensatoren eingesetzt werden, noch lange nicht erreicht.

Aufgabe der Erfindung ist es, ein elektrolytisches Ätzverfahren für rekristallisierte Aluminiumfolien anzugeben, welches die Herstellung von Aluminiumfolien mit ausschließlich reiner zylindrischer oder kubischer Ätztunnelstruktur mit einem einzigen Porendurchmesser d mit Tunneldichten > 10⁷/cm² Folienoberfläche unter Vermeidung von unregelmäßigem Lochfraß gestattet. Die Größenordnung der Tunneldurchmesser d beträgt dabei näherungsweise $d = 2k \times U$ (μm) mit U als Formierspannung in Volt und $k = 0,0013$ μm/V als Oxid-Sperrschichtdicke/Volt Formierspannung.

Diese Aufgabe wird erfindungsgemäß dadurch gelöst, daß in einer ersten Ätzstufe eine Ätzstromdichte oberhalb des Lochfraßpotentials von Aluminium verwendet wird und daß Weiterätzung mit einer Ätzstromdichte unterhalb des Lochfraßpotentials erfolgt.

Eine Ausgestaltung der Erfindung besteht darin, daß in an sich bekannter Weise eine Chlorid-Ionen enthaltende Ätzlösung verwendet wird.

Die nach dem erfindungsgemäßen Verfahren hergestellten Aluminiumfolien können als Elektrodenfolien in Elektrolytkondensatoren verwendet werden.

Die Vorteile des erfindungsgemäßen Verfahrens bestehen darin, daß Ätztunnels mit Tunneldichten > 10⁷/cm² Folienoberfläche unter Vermeidung von unregelmäßigem Lochfraß erhalten werden, die statistisch gleichmäßig über die Folienoberfläche und das gesamte Material verteilt sind. Der für eine vorgesehene Formierspannung erforderliche Ätzporendurchmesser d wird hauptsächlich von der elektrolytischen Aluminium-Abtragsrate bestimmt, welche üblicherweise 20 bis 40% des ursprünglichen Foliengewichts beträgt. Dadurch wird mit Hilfe des erfindungsgemäßen Verfahrens bei Gewährleistung ausreichender Folienfestigkeit eine höchstmögliche Folienaufrauhung und damit Kapazitätsvergrößerung bei geringstmöglicher Aluminiumabtragung erzielt.

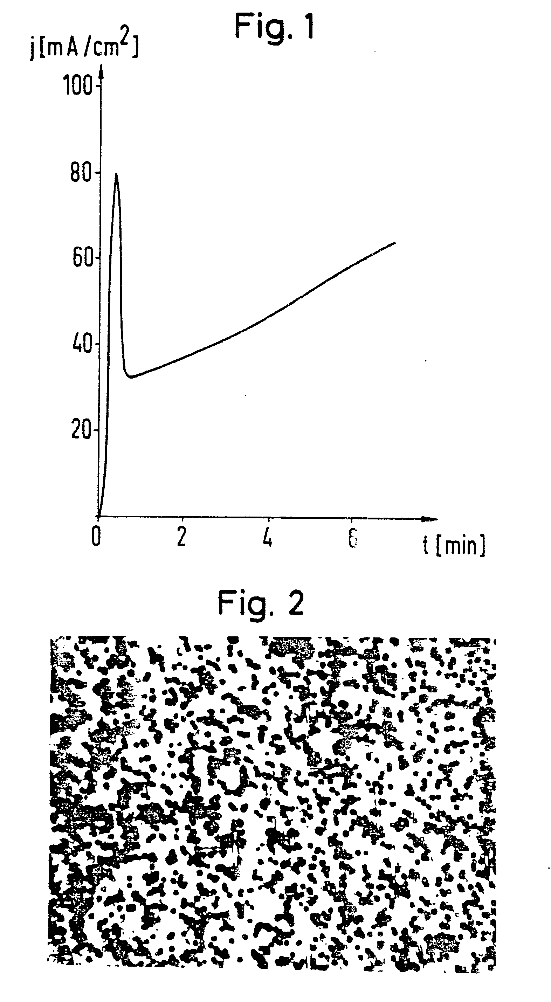

In der Fig. 1 ist der charakteristische Verlauf der Ätzstromdichte j in Abhängigkeit von der Zeit t von rekristallisierter Aluminiumfolie (Al 99,99) in einem chlorid-ionenhaltigen Ätzbad bei konstantem Anodenpotential dargestellt.

Der Fig. 1 ist zu entnehmen, daß die Ätzstromdichte innerhalb kurzer Zeit steil ansteigt, ein Maximum durchläuft, wieder zurückgeht um dann gleichmäßig anzusteigen. Die Analyse dieses ungewöhnlichen Stromdichteverlaufs ergibt, daß die Fixierung der Tunnelstruktur bereits innerhalb der ersten Minute der elektrolytischen Ätzung im Bereich des ersten Stromdichtemaximums erfolgt. Nach einer Induktionsperiode von ca. 10 Sekunden wachsen dabei die Ätztunnels mit Wachstumsgeschwindigkeiten von einigen μm/s bzw. äquivalenten Ätzstromdichten von größenordnungsmäßig 10²A/cm² mit ca. 0,2 μm Porendurchmesser autokatalytisch in kristall-orientierter 100-Richtung in das rekristallisierte Aluminium-Gitter. Auf das Stromdichtemaximum erfolgt ein monotoner Stromdichteanstieg, der bei geeigneter Wahl des Anodenpotentials das Wachstum der Oberflächenvergrößerung (gleichmäßige Tunnelerweiterung ohne groben Lochfraß) exakt widerspiegelt.

Die Tunneldichte wird dabei maßgeblich von der äußeren Ätzstromdichte in der Anfangsphase des Ätzprozesses bestimmt. Bis zu einem bestimmten Maximalwert der Ätzstromdichte wächst die Tunneldichte annähernd proportional, bei Überschreiten dieses Wertes erfolgt infolge von Passivierungserscheinungen ein Rückgang der Tunneldichte und zusätzlich grober Lochfraß.

Nachdem der Prozeß der ausschließlichen Tunnelbildung abgeschlossen ist (nach höchstens ca. einer Minute) wird zur Vermeidung von nunmehr normalerweise einsetzendem unregelmäßigen, mehr oder weniger grobem Lochfraß die Ätzstromdichte soweit begrenzt, daß nur noch eine gleichmäßige Aluminiumauflösung und damit eine Porenerweiterung bis zum gewünschten Wert erfolgt. Dabei ist die Ätzzeit für die Porenerweiterung im Verhältnis zur Ätzzeit der Fixierung der Porenstruktur in der Folie relativ lang, woraus die Gleichmäßigkeit des Porendurchmessers für alle Ätzporen beim erfindungsgemäßen Verfahren resultiert.

## Ausführungsbeispiel 1

Eine 75 μm dicke rekristallisierte Alu-minium-Folie (Al 99,99) wird mit Hilfe des erfindungsgemäßen Verfahrens in einer 1 normalen reinen Chloridlösung geätzt. Bei einem spezifischen Ladungsumsatz von 30 C/cm² erhält man nach einer Formierung auf 400 V eine spezifische Kapazität von 0,60 μF/cm². Mit Hilfe der bekannten Ätzverfahren wird lediglich eine spezifische Kapazität von 0,45 μF/cm² erreicht.

Die Fig. 2 zeigt ein mikroskopisches Oberflächenbild einer nach dem Ausführungsbeispiel geätzten Folie (Vergrößerung 1000 ×).

## Ausführungsbeispiel 2

Eine 100 μm dicke rekristallisierte Alumini-um-Folie (Al 99,99) wird mit Hilfe des erfindungsgemäßen Ätzverfahrens und einem spezifischen Ätzladungsumsatz von 50 C/cm² geätzt. Nach einer Formierung auf 400 V wird eine spezifische Kapazität von 0,74 μF/cm² erhalten, wogegen herkömmlich geätzte Folien nur eine spezifische Kapazität von 0,56 μF/cm² aufweisen.

## Patentansprüche

1. Verfahren zum elektrolytischen Ätzen einer rekristallisierten Aluminiumfolie, wobei die Ätzung als potentiostatische Ätzung mit zeitlich konstantem Anodenpotential durchgeführt wird, dadurch gekennzeichnet, daß in einer ersten Ätzstufe eine Ätzstromdichte oberhalb des Lochfraßpotentials von Aluminium verwendet wird und daß die Weiterätzung mit einer Ätzstromdichte unterhalb des Lochfraßpotentials erfolgt.

2. Verfahren nach Anspruch 1, gekennzeichnet durch die Verwendung eines Chlorid-Ionen enthaltenden Ätzbades.

3. Verwendung von nach den vorhergehenden Verfahren hergestellten Aluminiumfolien als Elektrodenfolien in Elektrolytkondensatoren.

## Claims

1. Process for the electrolytic etching of a recrystallized aluminium foil, in which the etching is carried out as a constant-potential etching with an anode potential which is constant with respect to time, characterised in that, in a first etching stage, an etching current density above the pitting potential of aluminium is used, and that the further etching is carried out with an etching current density which is below the pitting potential.

2. Process as claimed in Claim 1, characterised by the use of an etching bath which contains chloride ions.

3. Use of aluminium foils produced in accordance with the preceding processes as electrode foils in electrolytic capacitors.

## Revendications

1. Procédé pour réaliser l'attaque chimique électrolytique d'une feuille d'aluminium recristallisée, selon lequel l'attaque chimique est mise en oeuvre sous la forme d'une attaque chimique potentiostatique avec un potentiel d'anode constant dans le temps, carctérisée par le fait qu'au cours d'une première phase d'attaque chimique on utilise une densité du courant d'attaque chimique dépassant le potentiel de formation de piqûres de corrosion de l'aluminium et qu'on poursuit l'attaque chimique avec une densité du courant d'attaque chimique inférieure au potentiel de formation de piqûres de corrosion.

2. Procédé selon la revendication 1, caractérisée par l'utilisation d'un bain d'attaque chimique contenant des ions chlorure.

3. Mise en oeuvre de feuilles d'aluminium fabriquées selon les procédés indiqués précédemment, en tant que feuilles d'électrodes dans des condensateurs électrolytiques.

## Fig. 1

## Fig. 2